(19) Europäisches Patentamt
European Patent Office
Office européen des brevets

(11) **EP 3 010 675 B1**

(12) **FASCICULE DE BREVET EUROPEEN**

(45) Date de publication et mention
de la délivrance du brevet:
**19.08.2020 Bulletin 2020/34**

(21) Numéro de dépôt: **14738562.9**

(22) Date de dépôt: **18.06.2014**

(51) Int Cl.:
**B23D 57/02** (2006.01)  **E04C 2/08** (2006.01)

(86) Numéro de dépôt international:
**PCT/FR2014/051515**

(87) Numéro de publication internationale:
**WO 2014/202906 (24.12.2014 Gazette 2014/52)**

(54) **ENSEMBLE DE PLAQUES OBTENUES PAR DECOUPE D'UN BLOC EN MATERIAU METALLIQUE OU COMPOSITE**

MONTAGE VON PLATTEN, DIE DURCH SCHNEIDEN EINES BLOCKS AUS METALL- ODER VERBUNDMATERIALIEN ERHALTEN WERDEN

ASSEMBLY OF PLATES OBTAINED BY CUTTING A BLOCK OF METALLIC OR COMPOSITE MATERIAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.06.2013 FR 1355775**

(43) Date de publication de la demande:
**27.04.2016 Bulletin 2016/17**

(73) Titulaire: **Mecachrome France**
**37403 Amboise Cedex (FR)**

(72) Inventeurs:
• **DE PONNAT, Arnaud**
**F-37210 Vouvray (FR)**
• **BONNET, Cédric**
**F-71260 Péronne (FR)**
• **MARTIN, Olivier**
**F-45230 Sainte-Geneviève-des-Bois (FR)**

(74) Mandataire: **Benech, Frédéric**
**Cabinet Benech**
**15, rue d'Astorg**
**75008 Paris (FR)**

(56) Documents cités:
EP-A2- 0 266 022        EP-A2- 1 275 480
EP-A2- 2 226 133        WO-A1-2014/072661
WO-A1-2014/072661       DE-U1-202004 007 148
FR-A1- 2 740 371        JP-A- H10 137 958
KR-A- 20100 067 735     KR-A- 20130 036 507
NL-A- 8 603 213         US-A- 5 935 456

EP 3 010 675 B1

**Description**

La présente invention concerne un ensemble de plaques obtenues par découpe d'un bloc en matériau métallique ou composite, selon le préambule de la revendication 1.

Un tel ensemble est connu du document EP2226133A2.

Elle trouve une application particulièrement importante, bien que non exclusive, dans le domaine de l'ébauchage de pièces mécaniques découpées complexes c'est à dire de formes et/ou de surfaces complexes, et de dureté importante, c'est à dire d'une dureté Rockwell supérieure à 30. Elle propose ainsi des ébauches de pièces quasi finies en matériau métallique (notamment aluminium, titane, aciers) ou composite (notamment avec matrices thermodurcissable ou thermoplastique et fibres de carbone) par exemple utilisables dans l'aéronautique.

Plus précisément et en cas de fabrication d'une pièce mécanique métallique il est connu de partir d'un bloc de matière, dit brut, par exemple de fonderie, puis de l'usiner pour obtenir ainsi une ébauche (semi produit) de la pièce recherchée. Cette ébauche est ensuite affinée pour la formation du produit fini.

Plus l'ébauche résultante est proche de la forme finale désirée, moins il est nécessaire de retravailler la pièce et plus les chutes de matière sont faibles.

Il existe donc un besoin pour un ensemble de pièces produites avec précision dans un brut et comportant des formes complexes, et ce de façon aussi proche que possible de la forme finale désirée de la pièce, ce qui permet de limiter le nombre d'étapes ultérieure et les pertes de matière.

On connaît déjà des dispositifs de scie à lame ou à chaîne adaptés pour effectuer des découpes selon des trajectoires déterminées.

Mais ces dispositifs concernent d'une part le sciage selon des trajectoires rectilignes et d'autre part la découpe de matériaux tendres et/ou fibreux tel que le bois.

Ils ne permettent pas non plus des trajectoires complexes.

On peut citer le document NL 8 603 213 qui décrit un dispositif de découpe d'un profil dans un bloc en matière plastique, suivant une trajectoire formée par un guide qui présente au moins deux lignes d'inflexion et dans lequel est montée coulissante une lame avec des dents de scie.

Le dispositif est conçu pour effectuer une découpe dans la partie supérieure du bloc mais il ne peut pas former deux plaques de formes complémentaires, le support du guide ne pouvant pas pénétrer dans le bloc.

De plus, ce dispositif est conçu pour des matériaux de faible dureté, des arêtes de scie ne convenant pas à la découpe de blocs en matériaux métalliques ou composites.

On connaît aussi (DE 20 2004 007 148) un ensemble de deux pièces de forme complémentaire obtenue par découpe avec lame de scie arrondie.

Un tel ensemble est nécessairement d'épaisseur limitée et/ou présente des longueur et/ou largeur de dimensions réduites.

On connaît également des dispositifs de découpe par électro-érosion ou découpe à fil, par jet d'eau ou au laser.

Si ici ces techniques peuvent être utilisées pour l'usinage de formes complexes, encore faut-il qu'elles soient formées de surfaces réglées (génératrices rectilignes) et sur de faibles profondeurs (préférentiellement ≤ 300 mm).

Ainsi, le document WO 2014/072661 (opposable au titre de l'article 54(3) CBE) décrit un procédé et un dispositif de fabrication d'aubes de turbine. Le procédé prévoit de réaliser deux ébauches imbriquées dans un barreau en TiAl par découpe au jet d'eau.

La présente invention vise à fournir un ensemble de deux plaques obtenu par découpe répondant mieux que ceux antérieurement connus aux exigences de la pratique, notamment en ce qu'elle permet un gain de temps d'usinage par rapport au techniques connues, en ce qu'elle autorise des découpes de formes complexes, permettant des trajectoires avec des changements de direction nombreux et rapprochés, et ce sur des longueurs et/ou des largeurs de pièces de dimensions importantes.

Par dimensions importantes on entend des dimensions (longueur, largeur) de pièces à découper, supérieures à 600 mm, par exemple supérieures à 1m, 1m50 ou 2m voire plus.

L'épaisseur du bloc dans lequel les pièces sont découpées peut par contre être inférieure à 300 mm, par exemple inférieure à 200 mm, par exemple 100 mm, la limite étant celle de l'épaisseur des pièces recherchées et de la taille de la fente de découpe.

La présente invention permet également une économie de matière par pièce produite (jusqu'à 30% par rapport à l'art antérieur) du fait de la maîtrise de la géométrie de la forme de la découpe.

Elle part notamment de l'idée d'imbriquer plusieurs ébauches complexes dans un même brut en faisant en particulier pénétrer progressivement un système de découpe à l'intérieur du bloc, non seulement la partie coupante, à savoir des plaquettes de coupe, mais également sa partie guidante à savoir un guide.

Pour ce faire, l'invention propose un ensemble de plaques obtenues par découpe d'un bloc en matériau métallique ou composite s'étendant autour d'un plan et ayant une longueur, une largeur et une épaisseur, le bloc comprenant une première plaque présentant une face supérieure et une deuxième plaque présentant une face inférieure, la face inférieure de la deuxième plaque présentant une surface de forme complémentaire à la face supérieure de la première plaque en vis à vis à une hauteur constante près, correspondant à la hauteur du trait de découpe du bloc caractérisé en ce que la face supérieure de la première plaque présente une surface ayant au moins deux lignes d'inflexion parallèles à la longueur ou la largeur du bloc par rapport audit plan, et en ce que la dimension du bloc, longueur ou largeur, à laquelle lesdits au moins deux lignes d'inflexion sont parallèles, est supérieure ou égale à 600 mm.

Par lignes d'inflexion qui concernent plus particulièrement des trajectoires courbes, on entend aussi des successions de lignes de changement de pente dans un plan orthogonal à ladite face et dont le profil (section transversale) présente des angles successifs c'est à dire au moins deux jeux de deux angles opposés par rapport à un même côté, ou d'inflexion.

Autrement dit on entend une trajectoire par exemple droite changeant de directions au moins quatre fois dans un plan orthogonal au plan axial, et/ou engendrant une ligne de coupe avec au moins deux ondulations et/ou formant par exemple des angles (par exemple supérieur à 5°) par rapport à la dite droite.

Par hauteur, on entend la dimension dans le plan longitudinal perpendiculaire au plan du bloc.

Une telle fabrication est notamment possible grâce à l'introduction d'une chaîne comprenant des plaquettes de coupe ainsi qu'un guide de cette chaîne dans le bloc de matière, c'est-à-dire le brut, et ce au fur et à mesure de la découpe et sur toute l'épaisseur dudit bloc comme cela sera décrit plus précisément ci-après.

Cette introduction complète permise par une disposition latérale de maintien d'un dispositif de découpe et l'attaque normale par rapport au flan d'une chaîne, des plaquettes de coupe, et ce selon la trajectoire déterminée de la chaîne, autorise de façon nouvelle des géométries complexes de la découpe du bloc et donc des pièces obtenues.

Dans des modes de réalisation avantageux, on a par ailleurs et/ou de plus recours à l'une et/ou à l'autre des dispositions suivantes :

- la surface de la face supérieure présente au moins trois lignes d'inflexion, pour former une nervure ou un évidement ;
- l'angle entre des portions de surface séparées par une ligne d'inflexion est de 90°;
- la face supérieure de la première plaque présente au moins en partie un profil transversal courbe ;
- le trait de découpe suit une trajectoire au moins en partie de forme sinusoïdale;
- Selon l'invention, la découpe est effectuée sur une longueur (profondeur) de pièce supérieure ou égale à 600 mm, par exemple supérieure à 3 m, par exemple supérieure à 5 m et/ou sur une largeur de pièce et/ou de bloc supérieure à 600 mm, par exemple supérieure à 1 m, les pièces ou plaques obtenues présentant de telles dimensions;
- l'épaisseur de l'ensemble est inférieure à 300 mm ;
- les deux surfaces supérieure et inférieure en vis à vis sont découpées à l'aide d'une chaîne sans fin montée coulissante dans un guide de largeur constante correspondant à la hauteur de trait de découpe et selon une trajectoire déterminée pour présenter ladite surface ayant au moins une ligne de changement de pente par rapport audit plan ;
- le bloc est découpé suivant la trajectoire déterminée, par le biais d'une chaîne sans fin montée coulissante dans un guide formant ladite trajectoire, ladite chaîne étant symétrique par rapport à un plan axial longitudinal et formée d'un assemblage de maillons comportant sur un flan latéral au moins une plaquette de coupe munie d'une arête de coupe en saillie, ladite découpe étant effectuée dans une direction normale par rapport au dit flan ;
- les coordonnées des points de surface de la face supérieure (x1(t) et y1(t)) et de la face inférieure (x2(t) et y2(t)) sont définies de la façon suivante :

$$(7) \begin{cases} x_1(t) = x_0(t) + y'_0(t) = \dfrac{e}{\sqrt{x'_0(t)^2 + y'_0(t)^2}} \\[4mm] y_1(t) = y_0(t) - x'_0(t) = \dfrac{e}{\sqrt{x'_0(t)^2 + y'_0(t)^2}} \end{cases}$$

$$(8) \begin{cases} x_2(t) = x_0(t) - y'_0(t) = \dfrac{e}{\sqrt{x'_0(t)^2 + y'_0(t)^2}} \\[4mm] y_2(t) = x_0(t) + y'_0(t) = \dfrac{e}{\sqrt{x'_0(t)^2 + y'_0(t)^2}} \end{cases}$$

où $x_0$ et $y_0$ sont les coordonnées des points $M(x_0, y_0)$, d'une trajectoire dans un repère Oi, Oj et telles que :

$$\overrightarrow{OM} = x_0\,(t)\,\vec{i} + y_0(t)\vec{j}$$

avec

$$\frac{d\overrightarrow{OM}}{dt} = x'_0\,(t)\,\vec{i} + y'_0(t)\vec{j}$$

et 2e est la hauteur du trait de coupe du bloc.

Dans un mode de réalisation avantageux, l'ensemble comporte deux plaques imbriquées correspondantes l'une dans l'autre obtenue à partir du bloc d'épaisseur déterminée.

Avantageusement l'ensemble comprend plus de deux pièces, par exemple trois ou cinq.

L'invention sera mieux comprise à la lecture de la description qui suit de modes de réalisation donnés ci-après à titre d'exemples non limitatifs.

La description se réfère aux dessins qui l'accompagnent dans lesquels :

Les figures 1, 2 et 2A sont des vues en perspectives d'ensembles de pièces.

La figure 3 est une vue schématique en coupe d'un mode de réalisation d'ensemble de plaques selon l'invention.

La figure 4A est une vue schématique en perspective d'un exemple de bloc découpé par un dispositif, sur lequel sont également précisées les dimensions de longueur, largeur et épaisseur d'un bloc telles qu'utilisées dans le cas de la présente description.

La figure 4B illustre la trajectoire déterminée de la coupe de la figure 4A pour définition de son paramétrage.

La figure 5 est une représentation schématique en perspective d'un dispositif de découpe pour ensemble de plaques selon un mode de réalisation de l'invention.

La figure 6 est une vue en perspective d'une portion de guide avec chaîne du dispositif de découpe de la figure 5.

La figure 7 illustre schématiquement un autre type de dispositif de découpe d'un bloc utilisable pour obtenir un ensemble, illustrant les changements de direction possibles autour d'un axe colinéaire à celui de la chaîne.

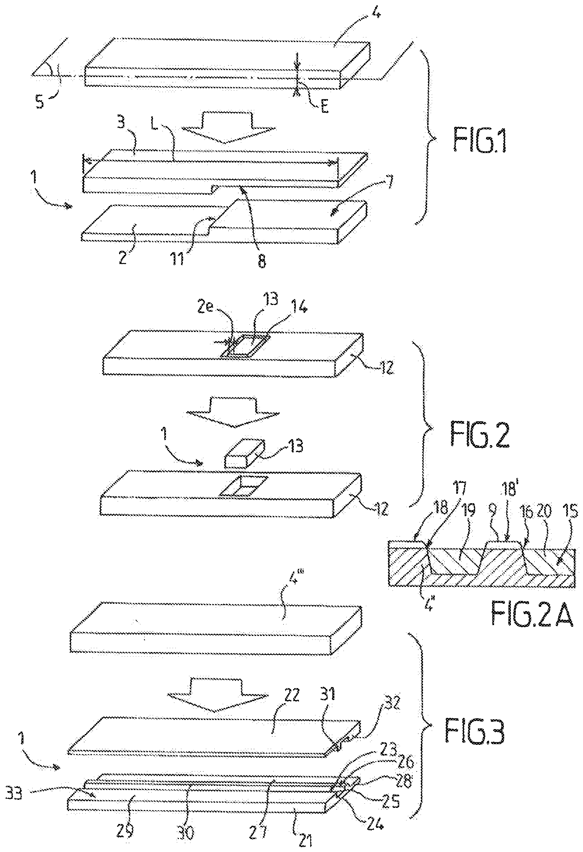

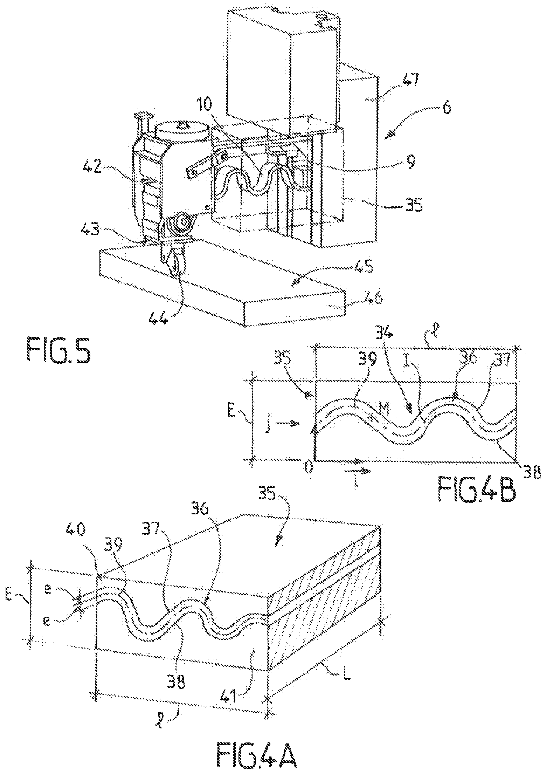

La figure 1 montre un ensemble 1 de deux plaques 2, 3 obtenues par découpe d'un bloc 4 parallélépipédique métallique ou composite (par exemple en résine thermodurcissable et fibres de carbone) de composition classiquement adoptée dans le cadre de la fabrication de structure d'avion ou de pièces dans le domaine de l'aérospatial ou de l'automobile, s'étendant autour d'un plan 5 (traits mixtes) découpé avec un dispositif 6 (cf. figure 5) comprenant une chaîne de découpe décrit de manière plus détaillé ci-après en référence au figures 5 à 7.

Le bloc 4 est en matériau métallique ou composite de longueur L, de largeur 1 et d'épaisseur E (cf. également figure 4A).

La longueur L et/ou largeur 1 des plaques est supérieure à 300 mm par exemple 600 mm.

L'épaisseur E (ou hauteur) de l'ensemble 1 du bloc 4 est inférieure à 300 mm, par exemple inférieure à 250 mm ou 100 mm.

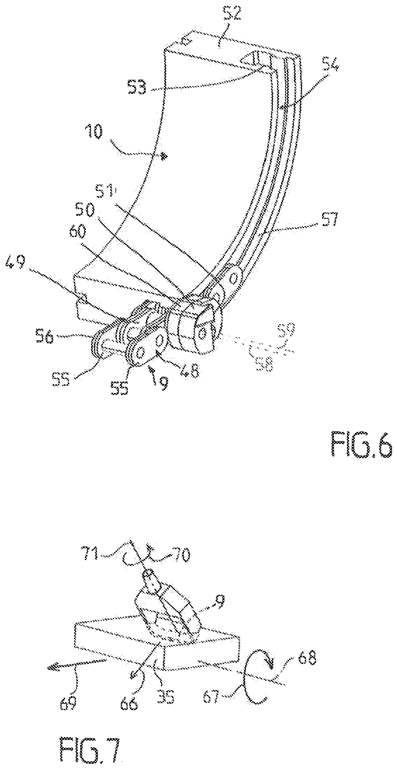

Selon cet exemple hors du cadre de l'invention, les deux surfaces supérieure 7 de la plaque 2 et inférieure 8 de la plaque 3 en vis à vis sont découpées à l'aide d'une chaîne 9 (cf. figures 5, 6) sans fin montée coulissante dans un guide 10 de largeur constante correspondant à la hauteur de trait de découpe et selon une trajectoire déterminée pour présenter ladite surface ayant au moins une ligne de changement de pente 11 par rapport au plan 5.

La face inférieure 8 est de forme complémentaire à la face supérieure 7 de la première plaque 2, les plaques 2, 3 étant donc obtenues par découpe du bloc 4 sur une hauteur constante 2e (cf. figure 4B).

En fin de découpe, les plaques 2, 3 sont ainsi imbriquées et à distance l'une avec l'autre, les faces supérieure 7 et inférieure 8 étant parallèles mais présentant un décrochement perpendiculaire au plan 5, à partir de la ligne 11.

Le changement de pente est donc ici double et concrétisé par un plan orthogonal à la face 7, sur une hauteur déterminée.

Dans la suite de la description on utilisera les mêmes numéros de références avec des indices pour désigner des éléments similaires et/ou identiques.

La figure 2 montre un autre exemple hors du cadre de l'invention d'un ensemble 1 de deux pièces 12, 13, à savoir une plaque de base 12 et une petite plaque parallélépipédique 13 insérée dans l'évidement ainsi constitué celui-ci étant par exemple non débouchant.

Dans ce cas une rainure 14 est réalisée par un dispositif comme celui qui sera décrit en référence à la figure 7, utilisée comme une pelle pour détacher le bloc 13.

Dans l'exemple particulier de la figure 2A, il est représenté schématiquement en coupe une première plaque inférieure 15 découpée dans le bloc 4" par le biais d'une chaîne qui sort et rerentre dans le bloc, la plaque inférieure 15 présentant dès lors des plateaux 18, au niveau de la face supérieure 18' du bloc 4".

Cette disposition permet d'obtenir plusieurs pièces supérieures 19, 20, séparées complémentaires de la première plaque 15, et ce dans le même bloc de base 4".

La figure 3 montre un mode de réalisation de l'invention. A partir d'un bloc 4''' on obtient deux plaques 21, 22 dont les surfaces complémentaires en vis à vis présentent une trajectoire de changement de pente ou décrochements orthogonaux selon plusieurs lignes d'inflexion, en l'espèce les lignes 23, 24, 25, 26, 27 et 28 parallèles.

On obtient ainsi une pièce inférieure 21 avec deux nervures 29, et 30, de renfort dans le sens longitudinal, et une pièce supérieure 22 avec deux nervures 31 et 32 complémentaires aux évidements en vis à vis.

En d'autres termes, la surface 33 de la face supérieure présente donc ici au moins trois changements de pente, pour former les nervures 29, 30, 31, 32 et leurs évidements complémentaires sur les faces correspondantes.

Dans l'exemple de la figure 1 et dans le mode de réalisation de la figure 3, les découpes des blocs 4 et 4''' s'effectuent respectivement transversalement et longitudinalement, (i.e. l'une est dans le sens de la largeur 1 et l'autre dans le sens de la longueur L).

On a représenté en référence aux figures 4A et 4B un autre mode de réalisation d'une trajectoire 34 de découpe dans un bloc 35, selon une courbe 36 de type sinusoïdal

Les coordonnées des points de surface de la face supérieure (x1(t) et y1(t)) et de la face inférieure (x2(t) et y2(t)) sont définies de la façon suivante :

$$(37) \quad \begin{cases} x_1(t) = x_0(t) + y'_0(t) = \dfrac{e}{\sqrt{x'_0(t)^2 + y'_0(t)^2}} \\[2em] y_1(t) = y_0(t) - x'_0(t) = \dfrac{e}{\sqrt{x'_0(t)^2 + y'_0(t)^2}} \end{cases}$$

$$(38) \quad \begin{cases} x_2(t) = x_0(t) - y'_0(t) = \dfrac{e}{\sqrt{x'_0(t)^2 + y'_0(t)^2}} \\[2em] y_2(t) = x_0(t) + y'_0(t) = \dfrac{e}{\sqrt{x'_0(t)^2 + y'_0(t)^2}} \end{cases}$$

où $x_0$ et $y_0$ sont les coordonnées des points M($x_0$, $y_0$), d'une trajectoire dans un repère Oi, Oj et telles que :

$$\overrightarrow{OM} = x_0(t)\,\vec{i} + y_0(t)\vec{j}$$

avec

$$\frac{d\overrightarrow{OM}}{dt} = x'_0(t)\,\vec{i} + y'_0(t)\vec{j}$$

et 2e est la hauteur du trait de coupe du bloc.

En d'autres termes, la trajectoire 34 du trait de coupe 36 de largeur 2e, définit les courbes 37 et 38 (espacées entre elles de 2e) selon les formules ci-dessus. La coupe est aussi centrée sur la courbe 39, fibre neutre de la découpe qui se confond également avec la trajectoire 34.

Sur les figures 4A et 4B la trajectoire 34 présente plusieurs points d'inflexion I, du fait de sa forme sinusoïdale ou sensiblement sinusoïdale.

A partir du bloc 35 il est donc obtenu des plaques 40 et 41 s'imbriquant à la hauteur de coupe près selon un profil transversal courbe.

La figure 5 montre le dispositif 6 de découpe d'un ensemble de pièces à partir du bloc 35 (cf. figure 4A et trait mixte sur la figure 5).

Le dispositif 6 comprend la chaîne sans fin 9 entrainée d'un côté par une couronne 42 rotative actionnée en rotation grâce à un motoréducteur (non représenté) par exemple électrique, le tout étant porté par un chariot 43 de support, et un élément roulant 44 pour assurer la translation du système en coopérant avec la surface 45 d'une plaque de guidage 46, et le renvoi de la chaîne 9 est assuré par deux pignons (non représentés) fous ou non, d'écartement de la chaîne.

Le moteur est commandé de façon connue en elle-même par un automate (non représenté), pour effectuer la découpe selon les modalités choisies (vitesse de coupe, avance etc...) .

Le dispositif 6 comprend également une structure 47 de support de l'ensemble et des moyens de mesure de la tension de la chaîne 9, de sa vitesse et/ou de son degrés d'usure etc... ici encore de façon connue en elle-même, mesures auxquelles est asservi le fonctionnement de l'automate.

En référence à la figure 6, le dispositif 6 comprend le guide 10 suivant la trajectoire déterminée, celle-ci étant par exemple la courbe 39 telle que représentée sur la figure 4B.

Le bloc 35 est ainsi découpé suivant la trajectoire 34 déterminé par le biais de la chaîne sans fin 9 montée coulissante dans le guide 10 (formant ladite trajectoire 34), la chaîne 9 étant symétrique par rapport à un plan 5 axial longitudinal et formée d'un assemblage de maillons 48, 49 comportant sur un flan latéral au moins une plaquette 50 de coupe munie d'une arête 51 de coupe en saillie, ladite découpe étant effectuée dans une direction normale par rapport au dit flan.

Dans le mode de réalisation du guide et de la chaîne utilisable pour obtenir un ensemble selon l'invention, qui est plus particulièrement décrit en référence à cette figure 6, le guide 10 comprend une enceinte longitudinale 52 de passage de la chaîne 9.

L'enceinte forme une gaine. La gaine est de largeur déterminée H, la plaquette 50 étant agencée pour effectuer la découpe sur la largeur 2e de trait de coupe 36 supérieure à H.

L'enceinte 52 est munie d'un côté d'une paroi latérale 53 ajourée de part en part définissant une fente 54 longitudinale.

La chaîne 9 comprend quant à elle plusieurs joues latérales 55 de guidage, réparties régulièrement le long de la chaîne 9. Les joues latérales 55 comprennent des bords périphériques 56 agencés pour coopérer à frottement (ou à roulement) avec les côtés 57 de la fente 54 sur la face externe de la paroi latérale 53 ajourée.

Plus précisément chaque maillon articulé 48, 49 de la chaîne 9 est formé par deux axes parallèles 58, 59 reliés entre eux par des plaques ou pastilles de jonction 60 les joues latérales 55 formant certaines de ces pastilles de jonction entre deux axes adjacents.

Dans le mode de réalisation plus particulièrement décrit ici l'enceinte 52 comprend deux nervures longitudinales 53, 54, à savoir une première nervure 53 centrale interne agencée pour coopérer à roulement ou frottement avec les axes 58, 59 d'articulation entre maillons et une seconde nervure 54 en vis à vis de la première nervure 53, la distance orthogonale entre la première et la seconde nervure étant égale à D (diamètre des axes) + d avec d $\leq$ 0,5 mm, par exemple < 0,1 mm.

En référence à la figure 7 et avec une chaîne 9 telle que décrit, il est possible de découper dans la plaque ou bloc 35, selon de multiples angles ou directions d'attaque, et notamment dans le sens longitudinal, i.e. dans une direction normale par rapport au flan de la chaîne 9 (flèche 66) mais également (en faisant pivoter la chaîne et son guide 10) en rotation (flèche 67) par rapport à l'axe longitudinal 68 de ladite chaîne (dont l'attaque se fait dans le bloc 35 selon la flèche 69), comme une pelleteuse à godet.

Une rotation (flèche 70) autour d'un axe 71 perpendiculaire à l'axe 68 permet également d'autres angles d'attaque.

On va maintenant décrire la fabrication de l'ensemble 1 des plaques de la figure 1 en utilisant le dispositif 6 de découpe des figures 5 à 7.

Après choix du bloc 4 en matériau métallique ou composite correspondant aux pièces que l'on veut fabriquer, on programme par l'intermédiaire d'un automate, la découpe que l'on veut réaliser.

Le guide 10 est choisi en fonction des paramètres nécessaires à la fabrication et peut par exemple être conçu de façon démontable et amovible pour permettre des épaisseurs de traits 36 de coupe 2e de largeurs différentes, par exemple comprises entre 1cm et 2cm.

Le bloc 4 est alors mis en place face à un dispositif 6 de coupe. Celle-ci est alors réalisée de façon connue en elle-même, la lubrification de la chaine 9 étant effectuée en permanence, par exemple par l'intermédiaire d'une injection de liquide lubrifiant en différents points d'injection du guide régulièrement répartis le long de celui-ci.

Le bloc 4 est alors avancé en étant poussé sur la scie ou a contrario, c'est le dispositif 6 lui-même qui vient se déplacer sur la pièce qui a alors été préalablement fixée de façon connue en elle-même sur un support (non représenté) jouant également un rôle de rigidificateur.

Le guide 10 et les plaquettes de coupe sont alors progressivement poussés en vis à vis du bloc 4 séparant petit à petit les pièces supérieure et inférieure 2 et 3, la chaîne 9 étant ici poussée dans le sens transversal du bloc 4. Dans le cas par exemple de fabrication de plaque du type de celle indiquée à la figure 3, le déplacement de la scie s'effectuera cette fois-ci dans le sens longitudinal des plaques 21, 22.

Au fur et à mesure que la scie découpe, les copeaux sont évacués (par exemple par un brise-copeaux).

Les plaques 2 et 3 sont par ailleurs progressivement saisies et maintenues de façon connue en elle-même, pour être ensuite évacuées.

Il est ainsi possible d'obtenir deux plaques 2, 3 de forme très proche avec une très petite perte de matériau et/ou de métal, à savoir et uniquement l'épaisseur du trait de coupe 2e.

Ces pièces imbriquées très proches de la forme usinée définitive peuvent être alors finalisées sans trop de difficultés.

Comme il va de soi et comme il résulte d'ailleurs de ce qui précède, la présente invention n'est pas limitée aux modes de réalisation plus particulièrement décrits. Elle en embrasse au contraire toutes les variantes et notamment celles où l'ensemble 1 comporte plus de deux plaques 21, 22, 40, 41 découpées simultanément par exemple un jeu de trois plaques voir de quatre plaques imbriquées les unes dans les autres, auquel cas les plaquettes de coupe et leur guide seront configurés en conséquence.

Dans un mode de réalisation, la trajectoire de la chaîne 9 de la découpe est alors amenée à sortir du bloc 4''', 35 et à y retourner une et/ou plusieurs fois (autant de fois qu'il y a de plaques en plus de la plaque inférieure).

**Revendications**

1. Ensemble de plaques (21, 22 ; 40, 41) obtenues par découpe d'un bloc ( 4''', 35) en matériau métallique ou composite s'étendant autour d'un plan et ayant une longueur, une largeur et une épaisseur, le bloc comprenant une première plaque ( 21, 40) présentant une face supérieure ( 33) et une deuxième plaque ( 22, 41) présentant une face inférieure, la face inférieure de la deuxième plaque ( 22, 41) présentant une surface de forme complémentaire à la face supérieure ( 33) de la première plaque ( 21, 40) en vis à vis à une hauteur constante près, correspondant à la hauteur du trait (34) de découpe du bloc ( 4''', 35) **caractérisé en ce que** la face supérieure ( 33) de la première plaque ( 21, 40) présente une surface ( 33) ayant au moins deux lignes d'inflexion parallèles à la longueur ou la largeur du bloc par rapport audit plan, et **en ce que**, la dimension du bloc, longueur ou largeur, à laquelle lesdites au moins deux lignes d'inflexion sont parallèles, est supérieure ou égale à 600 mm.

2. Ensemble selon la revendication 1, **caractérisé en ce que** la surface de la face supérieure(33) présente au moins trois lignes d'inflexion (23, 24, 25, 26, 27, 28), pour former une nervure (29, 30, 31, 32) ou un évidement.

3. Ensemble selon l'une quelconque des revendications précédentes, **caractérisé en ce que** l'angle entre des portions de surface séparées par une ligne d'inflexion ( 23, 24, 25, 26, 27, 28) est de 90°.

4. Ensemble selon l'une quelconque des revendications précédentes, **caractérisé en ce que** la face supérieure ( 33) de la première plaque ( 21, 40) présente au moins en partie un profil transversal courbe.

5. Ensemble selon la revendication 4, **caractérisé en ce que** le trait de découpe suit une trajectoire (34) au moins en partie de forme sinusoïdale.

6. Ensemble selon l'une quelconque de revendications précédentes, caractérisé en ce l'épaisseur de l'ensemble est inférieure à 300 mm.

7. Ensemble selon l'une quelconque des revendications précédentes, **caractérisé en ce que** les deux surfaces supérieure ( 33) et inférieure en vis à vis sont découpées à l'aide d'une chaîne (9) sans fin montée coulissante dans un guide (10) de largeur constante correspondant à la hauteur de trait (36) de découpe et selon une trajectoire (34) déterminée pour obtenir ladite surface ( 33) ayant au moins deux lignes d'inflexion ( 23, 24, 25, 26, 27, 28) par rapport audit plan .

8. Ensemble selon la revendication 7, **caractérisé en ce que** le bloc ( 4''', 35) est découpé suivant la trajectoire (34) déterminée, s'étendant selon la longueur ou la largeur du bloc par le biais d'une chaîne (9) sans fin montée coulissante dans un guide (10) formant ladite trajectoire (34), ladite chaîne (9) étant symétrique par rapport à un plan (5) axial longitudinal et formée d'un assemblage de maillons (48, 49) comportant sur un flan latéral au moins une plaquette (50) de coupe munie d'une arête (51) de coupe en saillie, ladite découpe étant effectuée dans une direction normale par rapport au dit flan.

9. Ensemble selon l'une quelconque des revendications précédentes, **caractérisé en ce que** les coordonnées des points de surface de la face supérieure (x1(t) et y1(t)) et de la face inférieure (x2(t) et y2(t)) sont définies de la façon suivante :

$$(37) \begin{cases} x_1\,(t) = x_0\,(t) + y'_0(t) = \dfrac{e}{\sqrt{x'_0\,(t)^2 + y'_0(t)^2}} \\[3mm] y_1\,(t) = y_0\,(t) - x'_0(t) = \dfrac{e}{\sqrt{x'_0\,(t)^2 + y'_0(t)^2}} \end{cases}$$

$$(38) \begin{cases} x_2\,(t) = x_0\,(t) - y'_0(t) = \dfrac{e}{\sqrt{x'_0\,(t)^2 + y'_0(t)^2}} \\[3mm] y_2\,(t) = x_0\,(t) + y'_0(t) = \dfrac{e}{\sqrt{x'_0\,(t)^2 + y'_0(t)^2}} \end{cases}$$

où $x_0$ et $y_0$ sont les coordonnées des points $M(x_0, y_0)$, d'une trajectoire dans un repère Oi, Oj et telles que :

$$\overrightarrow{OM} = x_0\,(t)\,\vec{\imath} + y_0(t)\vec{\jmath}$$

avec

$$\frac{d\overrightarrow{OM}}{dt} = x'_0\,(t)\,\vec{\imath} + y'_0(t)\vec{\jmath}$$

et 2$\underline{e}$ est la hauteur du trait de coupe du bloc.

**Patentansprüche**

1. Anordnung aus Platten (21, 22; 40, 41), die durch Schneiden eines Blocks (4''', 35) aus einem metallischen oder Verbundmaterial hergestellt werden, welcher sich um eine Ebene erstreckt und eine Länge, eine Breite und eine Dicke aufweist,
   **wobei** der Block eine erste Platte (21, 40) mit einer oberen Fläche (33) und eine zweite Platte (22, 41) mit einer unteren Fläche aufweist,
   **wobei** die untere Fläche der zweiten Platte (22, 41) eine Oberfläche mit einer Form aufweist, die komplementär ist zu der oberen Fläche (33) der ersten Platte (21, 40), welche ihr gegenüber bei einer nahezu konstanten Höhe angeordnet ist, die der Schnittlinie (34) des Blocks (4''', 35) entspricht,
   **dadurch gekennzeichnet,**
   **dass** die obere Fläche (33) der ersten Platte (21, 40) eine Oberfläche (33) mit mindestens zwei Knicklinien aufweist, die parallel zu der Länge oder zu der Breite des Blocks in Bezug auf die Ebene verlaufen, und
   **dass** die Abmessung des Blocks - Länge oder Breite - zu der die mindestens zwei Knicklinien parallel verlaufen, größer oder gleich 600 mm ist.

2. Anordnung nach Anspruch 1,
   **dadurch gekennzeichnet,**
   **dass** die Oberfläche der oberen Fläche (33) mindestens drei Knicklinien (23, 24, 25, 256, 27, 28) aufweist, um eine Rippe (29, 30, 31, 32) oder eine Ausnehmung zu bilden.

3. Anordnung nach einem der vorhergehenden Ansprüche,
   **dadurch gekennzeichnet,**
   **dass** der Winkel zwischen durch eine Schnittlinie (23, 24, 25, 26, 27, 28) getrennten Oberflächenabschnitten 90° beträgt.

4. Anordnung nach einem der vorhergehenden Ansprüche,
**dadurch gekennzeichnet,**
**dass** die obere Fläche (33) der ersten Platte (21, 40) zumindest teilweise ein gekrümmtes Querprofil aufweist.

5. Anordnung nach Anspruch 4,
**dadurch gekennzeichnet,**
**dass** die Schnittlinie einer Laufbahn (34) folgt, die zumindest teilweise sinusförmig ist.

6. Anordnung nach einem der vorhergehenden Ansprüche,
**dadurch gekennzeichnet,**
**dass** die Dicke der Anordnung geringer als 300 mm ist.

7. Anordnung nach einem der vorhergehenden Ansprüche,
**dadurch gekennzeichnet,**
**dass** die zwei gegenüberliegenden obere (33) und untere Fläche mit Hilfe einer Endloskette (9) geschnitten sind, die verschieblich in einer Führung (10) mit konstanter Breite montiert ist, welche der Höhe der Schnittlinie (36) entspricht, und gemäß einer Laufbahn (34), die festgelegt ist, um die Oberfläche (33) mit mindestens zwei Knicklinien (23, 24, 25, 25, 27, 28) in Bezug auf die Ebene zu ergeben.

8. Anordnung nach Anspruch 7,
**dadurch gekennzeichnet,**
**dass** der Block (4"', 35) gemäß der festgelegten Laufbahn (34), die sich gemäß der Länge oder der Breite des Blocks erstreckt, mittels einer Endloskette (9) geschnitten ist, die verschieblich in einer die Laufbahn (34) bildenden Führung (10) montiert ist,
**wobei** die Kette (9) symmetrisch zu einer axialen Längsebene (5) ist und durch eine Zusammensetzung von Kettengliedern (48, 49) gebildet ist, welche auf einer Seitenflanke mindestens ein Schneidplättchen (50) mit einer vorspringenden Schneidkante (51) aufweist,
**wobei** der Schnitt in einer senkrecht zur Flanke verlaufenden Richtung erfolgt.

9. Anordnung nach einem der vorhergehenden Ansprüche,
**dadurch gekennzeichnet,**
**dass** die Koordinaten der Oberflächenpunkte der oberen Fläche (x1(t) und y1 (t)) und der unteren Fläche (x2(t) und y2(t)) wie folgt definiert werden:

$$(37) \begin{cases} x_1(t) = x_0(t) + y'_0(t) = \dfrac{e}{\sqrt{x'_0(t)^2 + y'_0(t)^2}} \\[3em] y_1(t) = y_0(t) - x'_0(t) = \dfrac{e}{\sqrt{x'_0(t)^2 + y'_0(t)^2}} \end{cases}$$

$$(38) \begin{cases} x_2(t) = x_0(t) - y'_0(t) = \dfrac{e}{\sqrt{x'_0(t)^2 + y'_0(t)^2}} \\[3em] y_2(t) = x_0(t) + y'_0(t) = \dfrac{e}{\sqrt{x'_0(t)^2 + y'_0(t)^2}} \end{cases}$$

**wobei** $x_0$ und $y_0$ die Koordinaten der Punkte $M(x_0, y_0)$ einer Laufbahn in einem Bezugssystem Oi, Oj, welche derart sind,
**dass**:

$$\overrightarrow{OM} = x_0\,(t)\,\vec{\imath} + \ y_0(t)\vec{\jmath}$$

mit

$$\frac{\mathrm{d}\overrightarrow{OM}}{\mathrm{dt}} \ = \ x'_0\,(t)\,\vec{\imath} + \ y'_0(t)\vec{\jmath}$$

und 2e die Höhe der Schnittlinie des Blocks ist.

**Claims**

1. Set of plates (21, 22; 40, 41) obtained by cutting from a block (4''', 35) made of metallic or composite material extending around a plane and having a length, a width and a thickness, the block comprising a first plate (21, 40) presenting an upper face (33) and a second plate (22, 41) presenting a lower face, the lower face of the second plate (22, 41) presenting a surface having a shape complementary to the upper face (33) of the first plate (21, 40) facing it more or less at a constant height, corresponding to the height of the line (34) of cutting in the block (4''', 35), **characterised in that** the upper face (33) of the first plate (21, 40) presents a surface (33) having at least two lines of inflection parallel to the length or width of the block relative to said plane, and **in that** the dimension of the block, length or width, to which said at least two lines of inflection are parallel is greater than or equal to 600 mm.

2. Set according to claim 1, **characterised in that** the surface of the upper face (33) presents at least three lines of inflection (23, 24, 25, 26, 27, 28), in order to form a rib (29, 30, 31, 32) or a recess.

3. Set according to any one of the preceding claims, **characterised in that** the angle between the surface portions separated by a line of inflection (23, 24, 25, 26, 27, 28) is 90°.

4. Set according to any one of the preceding claims, **characterised in that** the upper face (33) of the first plate (21, 40) presents at least partially a curved transverse profile.

5. Set according to claim 4, **characterised in that** the cutting line follows a trajectory (34) at least partially of sinusoidal shape.

6. Set according to any one of the preceding claims, **characterised in that** the thickness of the set is less than 300 mm.

7. Set according to any one of the preceding claims, **characterised in that** the two surfaces facing each other, upper (33) and lower, are cut out using an endless chain (9) mounted in sliding relationship in a guide (10) having a constant width corresponding to the height of the cutting line (36) along a given trajectory (34) to obtain said surface (33) having at least two lines of inflection (23, 24, 25, 26, 27, 28) relative to said plane.

8. Set according to claim 7, **characterised in that** the block (4''', 35) is cut out along the given trajectory (34) extending along the length or width of the block by means of an endless chain (9) mounted in sliding relationship in a guide (10) forming said trajectory (34), said chain (9) being symmetrical relative to a longitudinal axial plane (5) and formed by an assembly of links (48, 49) comprising on a lateral flank at least one cutting insert (50) provided with a projecting cutting edge (51), said cutting being carried out in a normal direction relative to said flank.

9. Set according to any one of the preceding claims, **characterised in that** the coordinates of the surface points of the upper face (x1 (t) and y1 (t)) and of the lower face (x2 (t) and y2 (t)) are defined as follows:

$$(37) \begin{cases} x_1\,(t) = x_0\,(t) + y'_0(t) = \dfrac{e}{\sqrt{x'_0\,(t)^2 + y'_0(t)^2}} \\[3mm] y_1\,(t) = y_0\,(t) - x'_0(t) = \dfrac{e}{\sqrt{x'_0\,(t)^2 + y'_0(t)^2}} \end{cases}$$

$$(38) \begin{cases} x_2\,(t) = x_0\,(t) - y'_0(t) = \dfrac{e}{\sqrt{x'_0\,(t)^2 + y'_0(t)^2}} \\[3mm] y_2\,(t) = x_0\,(t) + y'_0(t) = \dfrac{e}{\sqrt{x'_0\,(t)^2 + y'_0(t)^2}} \end{cases}$$

where x0 and y0 are the coordinates of points M(x0, y0) of a trajectory in a coordinate system Oi, Oj, such that:

$$\overrightarrow{OM} = x_0\,(t)\,\vec{\imath} + y_0(t)\vec{\jmath}$$

where

$$\frac{d\overrightarrow{OM}}{dt} = x'_0\,(t)\,\vec{\imath} + y'_0(t)\vec{\jmath}$$

and 2e is the height of the block cutting line.

FIG.1

FIG.2

FIG.2A

FIG.3

FIG.5

FIG.4B

FIG.4A

FIG.6

FIG.7

## RÉFÉRENCES CITÉES DANS LA DESCRIPTION

**Documents brevets cités dans la description**

- EP 2226133 A2
- NL 8603213
- DE 202004007148
- WO 2014072661 A